# EUROPEAN PATENT SPECIFICATION

(11) **EP 2 957 543 B1**
(45) Date of publication and mention of the grant of the patent: **17.10.2018**
(21) Application number: 14752073.8
(22) Date of filing: 15.01.2014
(51) Int. Cl.: C01B 33/107, B01J 31/08

(54) **METHOD FOR PRODUCING TRICHLOROSILANE**
VERFAHREN ZUR HERSTELLUNG VON TRICHLOROSILAN
PROCÉDÉ POUR LA PRODUCTION DE TRICHLOROSILANE

(30) Priority: 13.02.2013 JP 2013025688
(43) Date of publication of application: 23.12.2015
(73) Proprietor: Shin-Etsu Chemical Co., Ltd., Tokyo 100-0004 (JP)
(72) Inventor: ISHIDA, Masahiko, Joetsu-shi Niigata 942-8601 (JP); SAITO, Hiroshi, Joetsu-shi Niigata 942-8601 (JP); HASEGAWA, Masayuki, Joetsu-shi Niigata 942-8601 (JP)
(74) Representative: Smaggasgale, Gillian Helen
(86) International application number: PCT/JP2014/000152
(87) International publication number: WO 2014/125762

(56) References cited:
- EP-A1- 2 546 197
- WO-A1-2012/056621
- JP-A- 2006 321 675
- JP-A- 2011 184 255
- JP-A- 2012 532 752

## Description

### Technical Field

The present invention relates to a method for producing trichlorosilane, and more particularly, to technique for easily separating trichlorosilane and methyldichlorosilane so as to obtain high-purity trichlorosilane.

### Background Art

Trichlorosilane (HSiCl₃) has been used as a raw material of high-purity polycrystalline silicon for use in production of a silicon wafer and the like since long ago. Many synthetic methods are known for obtaining trichlorosilane. For example, in Japanese Patent Laid-Open No. 56-73617 (Patent Literature 1), an invention relating to a method for producing trichlorosilane is disclosed, in which silicon tetrachloride as a byproduct of the production of trichlorosilane is efficiently converted into trichlorosilane.

In addition to this, the following methods for producing trichlorosilane are also known.

In Japanese Patent Laid-Open No. 2-208217 (Patent Literature 2), Japanese Patent Laid-Open No. 9-169514 (Patent Literature 3) and the like, a direct method in which metallurgical grade silicon is made into with hydrogen chloride at a temperature of about 250°C or higher is disclosed.

In Japanese Patent Laid-Open No. 60-36318 (Patent Literature 4), a method in which silicon tetrachloride is reacted with hydrogen in the presence of metallurgical grade silicon to be reduced into trichlorosilane is disclosed.

In Japanese Patent Laid-Open No. 10-29813 (Patent Literature 5), a method for reacting silicon tetrachloride with hydrogen in the presence of copper silicide to be reduced into trichlorosilane using copper silicide instead of the metallurgical grade silicon is disclosed.

Meanwhile, impurities such as phosphorus or boron act as donors or acceptors in a silicon crystal. Accordingly, these dopant components contained in a polycrystalline silicon as raw material for use in producing a semiconductor are incorporated into a silicon wafer as a final product. In the production of semiconductor grade polycrystalline silicon, therefore, high-purity trichlorosilane obtained by precision distillation is used.

In association with the technique for producing high-purity trichlorosilane, a method for separating and removing the above-described dopant components converted into an easily separable form with a getter or the like prior to distillation of trichlorosilane is also proposed (for example, refer to Japanese Patent Laid-Open No. 2004-250317 (Patent Literature 6)).

Further, carbon impurities in a silicon crystal form an impurity level in a band gap so as to act as a trap of carriers, or accelerate the formation of oxygen precipitate nuclei in the crystal so as to induce defects in a production process of a semiconductor device. Accordingly, the content of carbon impurities also becomes a problem in a semiconductor grade polycrystalline silicon.

The causes of contamination of polycrystalline silicon with carbon impurities can be from a carbon-containing compound derived from a carbon member used in a CVD reactor for use in depositing polycrystalline silicon, a carbon-containing compound contained in hydrogen or trichlorosilane and the like. It is, however, not easy to produce trichlorosilane with a carbon-containing compound being sufficiently removed.

The reasons for this are that metallurgical grade silicon for use in direct synthesis of trichlorosilane is produced in an arc furnace using carbon electrodes so that its purity is only about 99%, with carbon included as impurity, and that products flowing out from a CVD reactor for synthesis of trichlorosilane contain methylchlorosilanes derived from carbon members in the CVD reactor, resulting in a small amount of methylchlorosilanes derived from the carbon to be contained in trichlorosilane purified by distillation. For example, in the case of using metallurgical grade silicon which contains carbon impurities produced in an arc furnace using carbon electrodes, the reaction solution is contaminated with methylchlorosilanes having a boiling point lower than that of tetrachlorosilane as by-products from carbon impurities at a weight proportion of about several tens of ppm.

In particular, methyldichlorosilane is difficult to be removed, because it is as a major component of the methylchlorosilanes and also it has a boiling point (41°C) close to the boiling point (32°C) of trichlorosilane to be purified by distillation.

In view of such a problem, a purification method for trichlorosilane that can reduce a concentration of carbon impurities at a relatively low cost is disclosed in Japanese Patent Laid-Open No. 2004-149351 (Patent Literature 7). In the method, trichlorosilane is made into contact with an adsorbent such as silica gel or activated carbon, so that carbon-containing chlorosilanes in trichlorosilane are collectively removed in a uniform manner irrespective of the boiling point.

Further, a simplified method for purifying trichlorosilane by distillation is proposed in Japanese Patent Laid-Open No. 2011-184255 (Patent Literature 8), in which chlorine atoms are redistributed between tetrachlorosilane and methyldichlorosilane so as to convert methyldichlorosilane into methyltrichlorosilane having a high boiling point.

### Citation List

### Patent Literature

Patent Literature 1: Japanese Patent Laid-Open No. 56-73617
Patent Literature 2: Japanese Patent Laid-Open No. 2-208217
Patent Literature 3: Japanese Patent Laid-Open No. 9-169514
Patent Literature 4: Japanese Patent Laid-Open No. 60-36318
Patent Literature 5: Japanese Patent Laid-Open No. 10-29813
Patent Literature 6: Japanese Patent Laid-Open No. 2004-250317
Patent Literature 7: Japanese Patent Laid-Open No. 2004-149351
Patent Literature 8: Japanese Patent Laid-Open No. 2011-184255
Patent Literature 9: Japanese Patent Laid-Open No. 1-283817
Patent Literature 10: Japanese Patent Laid-Open No. 2000-178019

### Summary of Invention

### Technical Problem

The method disclosed in Patent Literature 8 is a preferable method capable of selectively converting a difficult-to-separate carbon-containing compound into an easy-to-separate compound having a high boiling point. The method, however, has a problem of requiring a treatment at high temperature, so that development of a more simplified method is desired.

Further, in separation of methylchlorosilanes with which trichlorosilane is contaminated by distillation to a high degree by a conventional method, a considerable load is applied to the purification by distillation for obtaining high-purity trichlorosilane due to proximity of the boiling points of trichlorosilane (boiling point: 32°C) and methyldichlorosilane (boiling point: 41°C), and a considerable amount of trichlorosilane is discarded by separation together with methylchlorosilanes, resulting in a lowered yield of trichlorosilane corresponding to the discarded amount, which is another problem.

In view of the problems, it is an object of the present invention to provide a simplified method for achieving high-purification of trichlorosilane at an improved yield.

### Solution to Problem

In order to solve the problem, the method for producing trichlorosilane of the present invention, i.e. the method for producing high-purity trichlorosilane by removing methyldichlorosilane from a mixture (S) containing methyldichlorosilane (CH₃HSiCl2), tetrachlorosilane (SiCl₄), and trichlorosilane (HSiCl₃), comprises the following procedures A, B, and C:
A: a procedure of distilling the mixture (S) so as to fractionate a fraction (Mhm) having a higher content of methyldichlorosilane in comparison with the mixture (S);
B: a procedure of adding a tetrachlorosilane to the fraction (Mhm) and treating a resulting mixture (Mmt) with a catalyst for redistributing chlorine atoms to redistribute chlorine atoms between methyldichlorosilane and tetrachlorosilane so as to convert methyldichlorosilane and tetrachlorosilane into trichlorosilane and methyltrichlorosilane (CH₃SiCl₃); and
C: a procedure of distilling the mixture (Mdc) obtained in the procedure B so as to separate and remove a fraction containing methyltrichlorosilane at a high concentration, wherein
a tertiary amine is used as the catalyst for redistributing the chlorine atoms under conditions at a temperature of 40 to 80°C in the procedure B.

In an aspect of the present invention, the distillations in the procedure A and in the procedure C may be performed in the same process.

The amount of tetrachlorosilane to be added in the procedure B is preferably 0.5 times or more by mol that of trichlorosilane contained in the fraction (Mhm).

The mixture (Mmt) obtained in the procedure B contains preferably not more than 0.1 wt% of a compound containing an aluminum atom or a boron atom.

The mixture (S) is, for example, a product in synthesis of trichlorosilane by a reaction of metallurgical grade silicon with hydrogen chloride.

Further, the mixture (S) is, for example, a product in a conversion reaction from tetrachlorosilane into trichlorosilane under a hydrogen-containing reducing atmosphere.

Furthermore, the mixture (S) is, for example, a reaction product discharged in a process of producing polycrystalline silicon from raw material trichlorosilane.

### Advantageous Effect on Invention

In the present invention, methyldichlorosilane (boiling point: 41°C) having a boiling point close to that of trichlorosilane (boiling point: 32°C) to be purified is converted into methyltrichlorosilane (boiling point: 66°C) having a higher boiling point through redistribution of chlorine atoms between methyldichlorosilane and tetrachlorosilane, achieving easy removal of impurities. Consequently, the load applied to the purification by distillation can be reduced, and the amount of chlorosilane discarded together with methyldichlorosilane can be substantially reduced.

In other words, the present invention provides a simplified method for achieving high-purification of trichlorosilane at an improved yield.

### Brief Description of Drawings

[Figure 1] Figure 1 is a first example of the flow chart for illustrating a method for producing trichlorosilane of the present invention.
[Figure 2] Figure 2 is a second example of the flow chart for illustrating a method for producing trichlorosilane of the present invention.
[Figure 3] Figure 3 is a third example of the flow chart for illustrating a method for producing trichlorosilane of the present invention.

### Description of Embodiment

With reference to drawings, embodiments of the present invention are described in detail in the following.

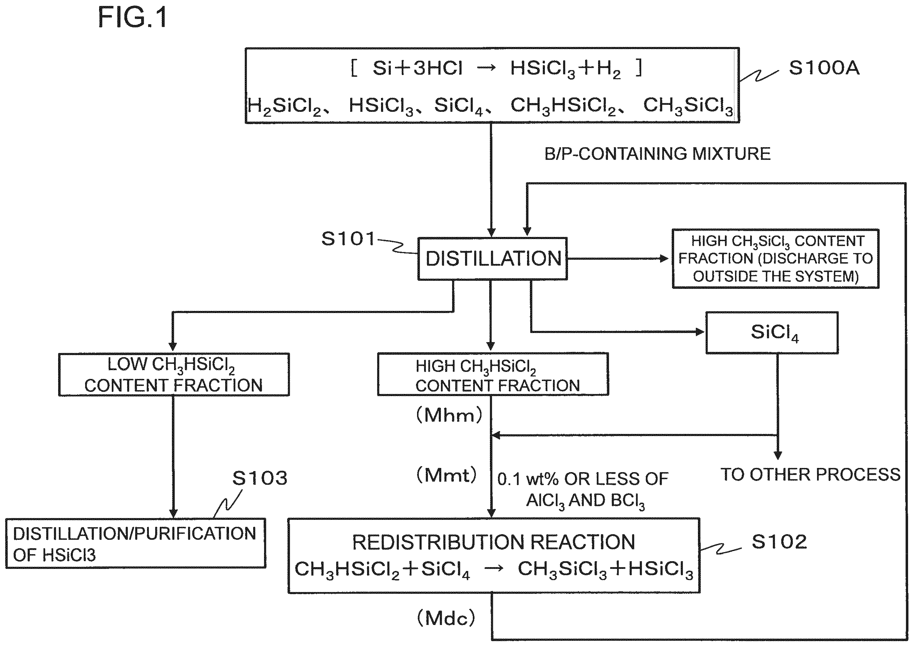

Figure 1 is a first example of the flow chart for illustrating a method for producing trichlorosilane of the present invention. In the case shown in the figure, a mixture (S) containing methyldichlorosilane (CH₃HSiCl₂), tetrachlorosilane (SiCl₄), and trichlorosilane (HSiCl₃) is a product in the synthesis of trichlorosilane by the reaction of metallurgical grade silicon with hydrogen chloride for (S100A).

First, the mixture (S) is distilled to fractionate a fraction (Mhm) having a higher content of methyldichlorosilane (CH₃HSiCl₂) in comparison with the mixture (S) (S101: procedure A).

A part of the tetrachlorosilane (SiCl₄) fractionated in distillation is added to the fractionated fraction (Mhm), and a resulting mixture (Mmt) is treated with a catalyst for redistributing chlorine atoms to redistribute chlorine atoms between methyldichlorosilane and tetrachlorosilane so as to produce trichlorosilane and to convert methyldichlorosilane into methyltrichlorosilane (CH₃SiCl₃) at the same time (S102: procedure B).

The remaining part of the tetrachlorosilane (SiCl₄) fractionated in the distillation (S101) is used in another process. The methyltrichlorosilane (CH₃SiCl₃) fractionated in the distillation (S101) is led to outside of the system for removal. Further, a fraction having a lower content of methyldichlorosilane (CH₃HSiCl₂) in comparison with the supplied mixture (S) fractionated in the distillation (S101) is sent to a process of purification by distillation for trichlorosilane (HSiCl₃) (S103).

For example, a tertiary amine may be used as the catalyst for redistributing chlorine atoms in the mixture (Mmt). In the chlorine atom redistribution process, preferably conditions are controlled such that the mixture (Mmt) to be produced contains not more than 0.1 wt% of a compound containing an aluminum atom or a boron atom.

The mixture (Mdc) obtained by redistribution of chlorine atoms in the step S102 is distilled for the second time, so that a fraction containing methyltrichlorosilane (CH₃SiCl₃) at a high concentration is separated and led to outside of the system for removal (procedure C). The fraction (Mdc) after redistribution is thus purified by distillation for separation removal of methyltrichlorosilane, so that separation of high-purity trichlorosilane (S103) can be more easily or simply achieved than by a conventional method, without substantial drop in the recovery percentage of trichlorosilane.

Although the figure illustrates an aspect in which the steps are repeatedly performed, with the distillation after the step S102 being performed by the same process as the distillation in the step S101, the present invention is not limited to the aspect. Although the fraction (Mdc) after redistribution combined with the mixture (S) before fractionation of the fraction (Mhm) having a high content of methyldichlorosilane is distilled to fractionate the fraction (Mhm) and to separate methyltrichlorosilane for removal at the same time in the illustrated case, methyldichlorosilane may be removed by a procedure for distillation of the fraction (Mdc) alone.

In the above-described flow, the difficult-to-remove methyldichlorosilane (boiling point: 41°C) having a boiling point close to that of trichlorosilane (boiling point: 32°C) is converted into methyltrichlorosilane (boiling point: 66°C) having a higher boiling point through redistribution of chlorine atoms between methyldichlorosilane and tetrachlorosilane. Consequently, easy removal of methyldichlorosilane (boiling point: 41°C) can be achieved, and the load applied to the purification by distillation in production of high-purity trichlorosilane can be reduced.

The fraction (Mhm) having a higher content of methyldichlorosilane in comparison with the supplied mixture (S) is fractionated in advance in the step S101, in order to efficiently convert methyldichlorosilane into methyltrichlorosilane (boiling point: 66°C).

Known examples of the catalyst for redistributing chlorine atoms between a chlorosilane having a small number of chlorine substitution (e.g. dichlorosilane) and tetrachlorosilane include activated carbon, an ion exchange resin having tertiary amine as a functional group, and a phosphonium salt (Patent Literature 9, Patent Literature 10, etc), which can be used also in the redistribution of chlorine atoms between methyldichlorosilane and tetrachlorosilane of the present invention.

Among these catalysts, an ion exchange resin having tertiary amine as a functional group of has an advantage to achieve redistribution at low temperature. In the case of the mixture (Mmt) for use in redistribution of chlorine atoms containing a large amount of compounds containing aluminum or boron, however, the catalyst life is substantially reduced. In the step of redistribution of chlorine atoms, preferably the content of compounds containing an aluminum atom or a boron atom in the mixture (Mmt) is as low as possible. The total content of aluminum atoms and boron atoms, in particular, is preferably not more than 0.1 wt%.

In order to control the content of compounds containing an aluminum atom or a boron atom, the mixture (S) containing methyldichlorosilane (CH₃HSiCl₂), tetrachlorosilane (SiCl₄), and trichlorosilane (HSiCl₃) is preferably subjected to a process for removing impurities such as aluminum and boron before use in the procedure A. A process for removing impurities such as aluminum and boron may be provided between the procedure A and the procedure B. Preferably such control of the content of impurities may be performed for tetrachlorosilane for use in the procedure B in a similar manner.

Many methods are known for removing boron purities (e.g. Patent Literature 6), and any of the methods allows aluminum impurities to be removed in parallel with removal of boron impurities.

The raw material to be supplied in the flow, i.e. the mixture (S) containing methyldichlorosilane (CH₃HSiCl2), tetrachlorosilane (SiCl₄), and trichlorosilane (HSiCl₃) is obtained from the manufacturing process of trichlorosilane by a direct method as described in, for example, Patent Literature 2 and Patent Literature 3. In this case, the principal products are trichlorosilane and tetrachlorosilane. Under optimal conditions, trichlorosilane and tetrachlorosilane are obtained in a ratio of about 80:20 to 20:80.

A procedure for extracting a fraction containing a higher amount of low-melting point methylchlorosilanes from the mixture (S) containing methyldichlorosilane (CH₃HSiCl₂), tetrachlorosilane (SiCl₄), and trichlorosilane (HSiCl₃) may be performed in a multi-stage process. In this case, after a rough distillation, a fraction mainly formed of trichlorosilane from which tetrachlorosilane on the low-boiling point-side has been substantially removed is extracted, and the fraction is further distilled to extract a fraction with a high content of low boiling point methylchlorosilanes. Consequently a fraction containing trichlorosilane as a main component with a content of methyldichlorosilane of about 200 to 10,000 ppmw can be obtained. To the fraction thus obtained, tetrachlorosilane as chlorine doner is added from outside, and chlorines are redistributed using a catalyst.

The sufficient amount of tetrachlorosilane to be added from outside is about 10 times by mol that of methyldichlorosilane. In the case of the amount 0.2 times or less by mol that of trichlorosilane contained in parallel, however, the amount of byproducts of the reaction for redistributing chlorines, i.e. dichlorosilane and monochlorosilane, increases. Accordingly, it is preferred that tetrachlorosilane in an amount 0.5 times or more by mol that of trichlorosilane is added. In other words, the amount of tetrachlorosilane to be added in the procedure B is preferably 0.5 times or more by mol that of trichlorosilane contained in the fraction (Mhm).

A tertiary amine catalyst can be preferably used as the catalyst for redistributing chlorines. More specifically, examples of the solid catalyst include an amine based weakly basic anion-exchange resin such as AMBERLYST A21 (registered trademark) (ROHM & HASS Company), AMBERLYST B20-HGDRY (registered trademark) (Organo Corporation), and DOWEX MWA-1 (registered trademark) (The Dow chemical Company).

In the reaction for redistributing chlorines, the fraction becomes liquid under conditions at a temperature of about 40 to 80°C and a pressure of 0 to 0.25 MPaG, with the reaction for redistributing chlorines itself proceeding, so that the structure of an equipment system can be simplified.

The contact with a catalyst for redistributing chlorine may be performed in a batch reaction or in a continuous reaction. In the case of continuous reaction, for example, a column is charged with a catalyst resin, through which a substrate for redistribution is passed at a superficial flow velocity of 2 m/hr to 6 m/hr, for a superficial retention time of 6 minutes to 30 minutes so as to allow the redistribution reaction to proceed.

Trichlorosilane can be easily extracted by distillation from the chlorosilanes obtained by the redistribution, with a substantially reduced content of methyldichlorosilane (S103). Unreacted tetrachlorosilane is returned to the reaction system for redistribution again. The fraction with a high content of methyltrichlorosilane (CH₃SiCl₃) is led to outside the system.

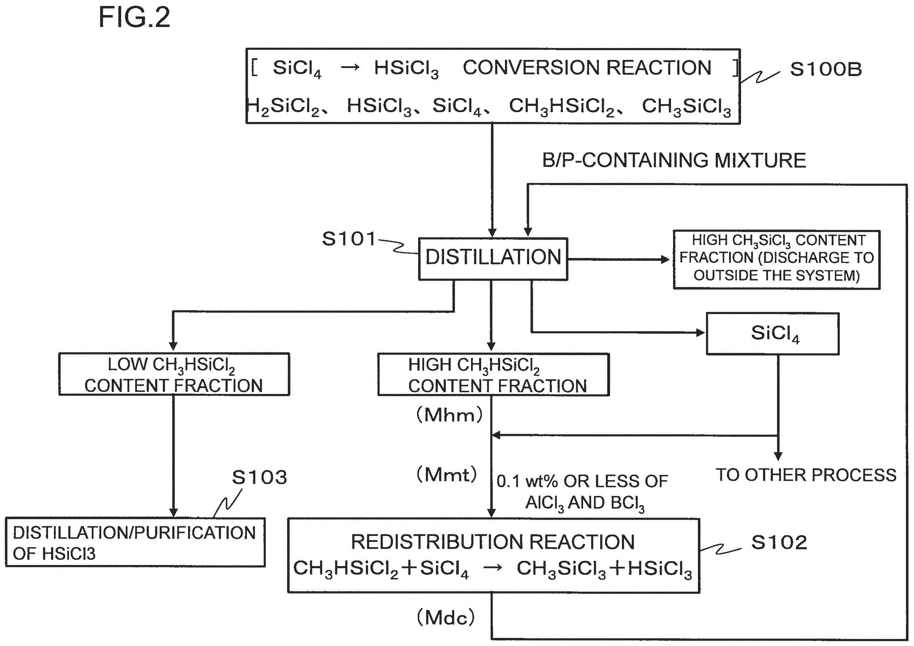

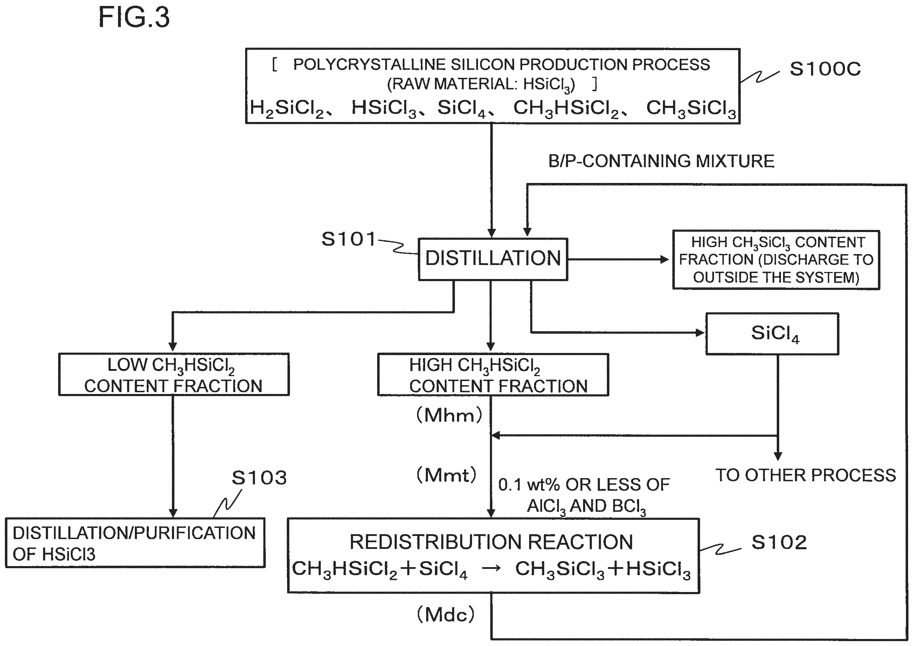

In Figure 1, the case of the mixture (S) containing methyldichlorosilane (CH₃HSiCl2), tetrachlorosilane (SiCl₄), and trichlorosilane (HSiCl₃) as a product in the synthesis of trichlorosilane by the reaction of metallurgical grade silicon with hydrogen chloride for is shown. Also in the case of the mixture (S) as a product of conversion reaction from tetrachlorosilane into trichlorosilane under hydrogen-containing reducing atmosphere (S100B) as shown in Figure 2, and in the case of the mixture (S) as a reaction product discharged in a process for producing polycrystalline silicon from raw material trichlorosilane as shown in Figure 3 (S100C), the basic procedures are performed in the same way as described above.

### Examples

With reference to Examples, the method for producing trichlorosilane of the present invention is more specifically explained below.

### (Example 1) Effect of redistribution of chlorine

A packed tower filled with a weakly basic anion-exchange resin having dimethylamine as a functional group AMBERLYST B20-HGDRY (registered trademark) (Organo Corporation) was vacuum dried to a water content of 2 wt% or less. The effect of redistribution of methylchlorosilane was then inspected. A Teflon (registered trademark) tube with a diameter of 9.7 mm and a length of 900 mm was used for the packed tower.

The liquids of trichlorosilane with a content of methyldichlorosilane of 1,500 ppmwt and an equimolar amount of tetrachlorosilane were passed through the packed tower. The packed tower was maintained at 60 to 80°C, and the supply was performed at a superficial flow velocity of 2.25 m/hr.

The quantities of methyldichlorosilane (CH₃HSiCl₂) and methyltrichlorosilane (CH₃SiCl₃) in methylsilanes contained in the product mixture obtained from the packed tower were determined. More specifically, the analysis was performed by gas chromatography using a hydrogen flame ionization detector (FID), and the contents of methyldichlorosilane and methyltrichlorosilane were measured from a calibration curve prepared using standard samples. The contents of trichlorosilane (HSiCl₃) and tetrachlorosilane (SiCl₄) were quantitatively determined by gas chromatography using a thermal conductivity detector (TCD). The results of quantitative determination are shown in Table 1.

**[Table 1]**

| | Reaction temperature °C | CH₃SiHCl₂ ppmwt | CH₃SiCl₃ ppmwt | SiHCl₃ Wt% | SiCl₄ Wt% |
|---|---|---|---|---|---|
| Raw material | - | 1480 | 60 | 43.2 | 56.6 |
| AMBERLYST B20·HGDRY™ | 60 | 110 | 1820 | 43.4 | 56.4 |
| | 80 | 30 | 1910 | 43.4 | 56.4 |

From the results shown in Table 1, a reduction in the amount of methyldichlorosilane (CH₃HSiCl₂) was confirmed at temperature in the range of 60 to 80°C. Even at 60°C, 90% or more of methyldichlorosilane is converted into methyltrichlorosilane (CH₃SiCl₃).

### [Example 2] Reduction in degree of conversion with catalyst poisoned with boron trichloride

Tetrachlorosilane (SiCl₄) to which 0.1 wt% boron trichloride solution had been added as Lewis acid was passed through the same catalyst as that used in Example 1, and then the redistribution reaction treatment of dichlorosilane (SiH₂Cl₂) and tetrachlorosilane (SiCl₄) was performed to examine the activity of catalysts. The results are shown in Table 2.

**[Table 2]**

| | BCl₃ | Reaction temperature °C | SiH₂Cl₂ Wt% | SiHCl₃ Wt% | SiCl₄ Wt% |
|---|---|---|---|---|---|
| Raw material | - | - | 16.5 | 0 | 83.5 |
| AMBERLYST B20·HGDRY™ | Before passing liquid | 45 | 0.5 | 43.4 | 56.4 |
| | After passing liquid | 45 | 6.9 | 25.5 | 67.1 |

After passing the boron trichloride solution, the yield of trichlorosilane (HSiCl₃) decreased, so that the reduction in catalyst activity is perceived. Accordingly, in the redistribution reaction of methyldichlorosilane (CH₃HSiCl₂) also, it can be expected that the removal of Lewis acid (aluminum chloride) in tetrachlorosilane (SiCl₄) to be supplied and the removal of Lewis acid (boron trichloride) in trichlorosilane lead to an efficient redistribution reaction.

As described above, in order to produce high-purity trichlorosilane by removing methyldichlorosilane from a mixture (S) containing methyldichlorosilane (CH₃HSiCl₂), tetrachlorosilane (SiCl₄), and trichlorosilane (HSiCl₃), the method for producing trichlorosilane of the present invention comprises the following procedures A, B, and C:
A: a procedure of distilling the mixture (S) so as to fractionate a fraction (Mhm) having a higher content of methyldichlorosilane in comparison with the mixture (S);
B: a procedure of adding a tetrachlorosilane to the fraction (Mhm) and treating a resulting mixture (Mmt) with a catalyst for redistributing chlorine atoms to redistribute chlorine atoms between methyldichlorosilane and tetrachlorosilane so as to convert methyldichlorosilane and tetrachlorosilane into trichlorosilane and methyltrichlorosilane (CH₃SiC₃); and
C: a procedure of distilling the mixture (Mdc) obtained in the procedure B so as to separate and remove a fraction containing methyltrichlorosilane at a high concentration.

With such a constitution, methyldichlorosilane (boiling point: 41°C) having a boiling point close to that of trichlorosilane (boiling point: 32°C) to be purified is converted into methyltrichlorosilane (boiling point: 66°C) having a higher boiling point through redistribution of chlorine atoms between methyldichlorosilane and tetrachlorosilane, achieving easy removal of impurities. Consequently, the load applied to the purification by distillation can be reduced, and the amount of chlorosilane discarded together with methyldichlorosilane can be substantially reduced.

### Industrial Applicability

The present invention provides a simplified method for achieving high-purification of trichlorosilane at an improved yield.

## Claims

1. A method for producing high-purity trichlorosilane by removing methyldichlorosilane from a mixture (S) containing methyldichlorosilane (CH₃HSiCl2), tetrachlorosilane (SiCl₄), and trichlorosilane (HSiCl₃), comprising the following procedures A, B, and C:
A: a procedure of distilling the mixture (S) so as to fractionate a fraction (Mhm) having a higher content of methyldichlorosilane in comparison with the mixture (S);
B: a procedure of adding a tetrachlorosilane to the fraction (Mhm) and treating a resulting mixture (Mmt) with a catalyst for redistributing chlorine atoms to redistribute chlorine atoms between methyldichlorosilane and tetrachlorosilane so as to convert methyldichlorosilane and tetrachlorosilane into trichlorosilane and methyltrichlorosilane (CH₃SiCl₃); and
C: a procedure of distilling the mixture (Mdc) obtained in the procedure B so as to separate and remove a fraction containing methyltrichlorosilane at a high concentration, wherein
a tertiary amine is used as the catalyst for redistributing the chlorine atoms under conditions at a temperature of 40 to 80°C in the procedure B.

2. The method for producing trichlorosilane according to claim 1, wherein the distillations in the procedure A and in the procedure C are performed in the same process.

3. The method for producing trichlorosilane according to claim 1 or 2, wherein the amount of tetrachlorosilane to be added in the procedure B is 0.5 times or more by mol that of trichlorosilane contained in the fraction (Mhm).

4. The method for producing trichlorosilane according to claim 1 or 2, wherein the mixture (Mmt) obtained in the procedure B contains not more than 0.1 wt% of a compound containing an aluminum atom or a boron atom.

5. The method for producing trichlorosilane according to claim 1 or 2, wherein the mixture (S) is a product in synthesis of trichlorosilane by a reaction of metallurgical grade silicon with hydrogen chloride.

6. The method for producing trichlorosilane according to claim 1 or 2, wherein the mixture (S) is a product in a conversion reaction from tetrachlorosilane into trichlorosilane under a hydrogen-containing reducing atmosphere.

7. The method for producing trichlorosilane according to claim 1 or 2, wherein the mixture (S) is a reaction product discharged in a process of producing polycrystalline silicon from raw material trichlorosilane.

## Patentansprüche

1. Verfahren für die Herstellung von hochreinem Trichlorsilan durch Entfernen von Methyldichlorsilan aus einer Mischung (S), die Methyldichlorsilan (CH₃HSiCl₂), Tetrachlorsilan (SiCl₄) und Trichlorsilan (HSiCl₃) enthält, das die folgenden Vorgänge A, B und C umfasst:
A: einen Vorgang des Destillierens der Mischung (S), um eine Fraktion (Mhm) zu fraktionieren, die einen höheren Gehalt an Methyldichlorsilan im Vergleich zu der Mischung (S) aufweist;
B: einen Vorgang des Zugebens eines Tetrachlorsilans zu der Fraktion (Mhm) und des Behandelns einer entstehenden Mischung (Mmt) mit einem Katalysator für die Umverteilung von Chloratomen, um Chloratome zwischen Methyldichlorsilan und Tetrachlorsilan umzuverteilen, sodass Methyldichlorsilan und Tetrachlorsilan in Trichlorsilan und Methyltrichlorsilan (CH₃SiCl₃) umgewandelt werden; und
C: einen Vorgang des Destillierens der Mischung (Mdc), die in dem Vorgang B erhalten wurde, um eine Fraktion, die Methyltrichlorsilan in einer hohen Konzentration enthält, abzutrennen und zu entfernen, wobei
ein tertiäres Amin als Katalysator für die Umverteilung der Chloratome unter Bedingungen bei einer Temperatur von 40 bis 80 °C in dem Vorgang B verwendet wird.

2. Verfahren für die Herstellung von Trichlorsilan nach Anspruch 1, wobei die Destillationen in dem Vorgang A und in dem Vorgang C im gleichen Verfahren durchgeführt werden.

3. Verfahren für die Herstellung von Trichlorsilan nach Anspruch 1 oder 2, wobei die Menge von Tetrachlorsilan, die in dem Vorgang B zuzugeben ist, das 0,5-Fache oder mehr, in mol, von der von Trichlorsilan, die in der Fraktion (Mhm) enthalten ist, beträgt.

4. Verfahren für die Herstellung von Trichlorsilan nach Anspruch 1 oder 2, wobei die Mischung (Mmt), die in dem Vorgang B erhalten wird, nicht mehr als 0,1 Gew.-% einer Verbindung enthält, die ein Aluminiumatom oder ein Boratom enthält.

5. Verfahren für die Herstellung von Trichlorsilan nach Anspruch 1 oder 2, wobei die Mischung (S) ein Produkt in der Synthese von Trichlorsilan durch eine Reaktion von metallurgischem Silicium mit Chlorwasserstoff ist.

6. Verfahren für die Herstellung von Trichlorsilan nach Anspruch 1 oder 2, wobei die Mischung (S) ein Produkt in einer Umwandlungsreaktion von Tetrachlorsilan in Trichlorsilan unter einer Wasserstoff-enthaltenden reduzierenden Atmosphäre ist.

7. Verfahren für die Herstellung von Trichlorsilan nach Anspruch 1 oder 2, wobei die Mischung (S) ein Reaktionsprodukt ist, das in einem Verfahren der Herstellung von polykristallinem Silicium aus Rohmaterial von Trichlorsilan abgeführt wird.

## Revendications

1. Méthode de production de trichlorosilane de haute pureté, par l'élimination de méthyldichlorosilane à partir d'un mélange (S) contenant du méthyldichlorosilane (CH₃HSiCl₂), du tétrachlorosilane (SiCl₄) et du trichlorosilane (HSiCl₃), comprenant les modes opératoires A, B et C suivants :
A : un mode opératoire de distillation du mélange (S) de manière à fractionner une fraction (Mhm) ayant une teneur supérieure en méthyldichlorosilane par rapport au mélange (S) ;
B : un mode opératoire d'addition d'un tétrachlorosilane à la fraction (Mhm) et de traitement d'un mélange résultant (Mmt) avec un catalyseur de redistribution des atomes de chlore de manière à redistribuer les atomes de chlore entre le méthyldichlorosilane et le tétrachlorosilane de manière à convertir le méthyldichlorosilane et le tétrachlorosilane en trichlorosilane et en méthyltrichlorosilane (CH₃SiCl₃); et
C : un mode opératoire de distillation du mélange (Mdc) obtenu dans le mode opératoire B de manière à séparer et éliminer une fraction de méthyltrichlorosilane à une concentration élevée ; où
une amine tertiaire est utilisée comme catalyseur de redistribution des atomes de chlore dans des conditions d'une température allant de 40 à 80°C dans le mode opératoire B.

2. Méthode de production de trichlorosilane selon la revendication 1, dans laquelle les distillations dans le mode opératoire A et le mode opératoire C sont effectuées dans le même procédé.

3. Méthode de production de trichlorosilane selon la revendication 1 ou 2, dans laquelle la quantité de tétrachlorosilane ajoutée dans le mode opératoire B est de 0,5 fois ou plus, en moles, celle du trichlorosilane contenu dans la fraction (Mhm).

4. Méthode de production de trichlorosilane selon la revendication 1 ou 2, dans laquelle le mélange (Mmt) obtenu dans le mode opératoire B contient au plus 0,1% en poids d'un composé contenant un atome d'aluminium ou un atome de bore.

5. Méthode de production de trichlorosilane selon la revendication 1 ou 2, dans laquelle le mélange (S) est un produit dans la synthèse de trichlorosilane par une réaction de silicium de qualité métallurgique avec du chlorure d'hydrogène.

6. Méthode de production de trichlorosilane selon la revendication 1 ou 2, dans laquelle le mélange (S) est un produit dans une réaction de conversion de tétrachlorosilane en trichlorosilane sous une atmosphère réductrice contenant de l'hydrogène.

7. Méthode de production de trichlorosilane selon la revendication 1 ou 2, dans laquelle le mélange (S) est un produit de réaction déchargé dans un procédé de production de silicium polycristallin à partir d'une matière première de trichlorosilane.
